# EUROPEAN PATENT APPLICATION

(11) **EP 1 376 509 A2**
(43) Date of publication of application: **02.01.2004**
(21) Application number: 03380102.8
(22) Date of filing: 29.04.2003
(51) Int. Cl.: G08C 19/00

(54) **An integrated system for remotely controlling a swimming pool's facilities and peripherals**

(30) Priority: 26.06.2002 ES 200201466
(71) Applicant: Sacopa, S.A., 17854 Sant Jaume de Llierca, Girona (ES)
(72) Inventor: Ares Losada, Manuel, c/o Sacopa, S.A.U., 17854 Sant Jaume de Llierca (Girona) (ES)
(74) Representative: Pastells Teixido, Manuel

(57) **Abstract**

This system comprises a control unit being apt to send and receive commands and having a touch screen being apt to display by means of icons the state of the facilities to be controlled; and several actuation modules being apt to activate and deactivate the operation of the different peripherals and being duly provided with actuation outputs; said system using the mains as a communication means. The system allows to carry out a direct or a timed control; the actuation modules are provided with analog and digital inputs; the transmission being effected through the mains is a bidirectional transmission; and the control unit comprises a real time clock allowing to carry out timed cycles, said control unit being in form of an ergonomic housing being apt to be installed as a desktop unit or as a wall-mounted unit.

## Description

There are several systems for controlling housing facilities, and also some for controlling swimming pool facilities, said systems generally comprising a centralised terminal for controlling several functions by using as a communication means the switchboards, cables, ultrasound emitters or the mains, the control terminal or unit comprising a screen and pushbuttons allowing to gain access to the different apparatuses to be controlled.

This invention has as its object a system for monitoring and controlling from the inside of the dwelling the facilities and peripherals being associated to the swimming pool's environment, said system being apt to be implemented with no need for additional facilities, the facilities to be controlled being possibly distributed in different areas and only requiring a socket for their connection to the mains.

This system is operable to carry out the maintenance of the swimming pool and its environment to thus greatly simplify the whole control of the associated facilities.

For such a purpose a control unit is arranged inside the dwelling and several actuation modules are arranged in the apparatus rooms and are used to activate and deactivate the operation of the different peripherals.

The control unit is apt to send and receive commands and has a touch screen being apt to display by means of icons the state of the facilities to be controlled, such as: filtering plant, swimming pool lighting, garden lighting, optical fibre system, irrigation system, heating, water effects, probe reading, etc. This graphic touch screen is apt to be dynamically redefined in such a way that pressing on the icons gives access to different menus allowing to carry out the programming and timing of the actuations.

Said control unit is in form of an ergonomic housing being apt to be installed as a desktop unit or as a wall-mounted unit and comprises a real time clock allowing to carry out the weekly programming of the operation of the associated peripherals.

The control unit is optionally operable as follows: as a basic (on/off) switch; as a cycle timer (switching on and switching off time or duration, allowing to switch on 4 times a day at the most, and weekly programming); or to provide a control cycle, probe reading and facility actuation, and a set point to be maintained.

The actuation modules interpret the received commands and execute them, and they can also send a response to the control unit in order to confirm that they have received and executed the command.

These actuation modules consist of: outputs such as for example of the relay, Triac or digital type allowing to carry out the actuation either directly or by means of a contactor depending on the power rating of the facility to be controlled; digital inputs for the connection of probes with open/closed contact output; and analog inputs for the connection of analog probes.

As a transmission means the mains will be used, or else it will be also optionally possible to use a connecting cable in those cases where the interferences being caused by the mains do not allow the correct operation of the whole system.

This system has its own protocol and is designed on the basis of an integrated circuit of the network modem type allowing the communication through the mains as per the Cenelec standard in force.

### The system's operation:

Timed cycles can be programmed on a daily or on a weekly basis, said programming allowing to switch on and off up to four times a day and comprising the filtration (filter pump and temperature), the lighting (swimming pool, optical fibre and garden), the irrigation (solenoid valve), and the swimming pool bottom flushing device with separate pump (or swimming pool bottom flushing device pump).

When having programmed the control cycles and as a function of the readings being obtained from the probes the corresponding circuit is activated till having reached the set point having been preset for the heating (contactor and water temperature), for the swimming pool filling (level sensing probe and solenoid valve), for the C1 proportioning (Cl sensing probe and proportioning pump), for the pH proportioning (pH sensing probe and proportioning pump), and for the washing of the sand filters (motorised valve and pressure sensing probe).

This system allows to modify any of the parameters by means of a dynamically arranged menu arrangement facilitating a sequential access to the variables to be controlled.

The invention can within its essentiality be put into practice in different embodiments equally falling within the scope of the protection being sought.

## Claims

1. An integrated system for remotely controlling a swimming pool's facilities and peripherals, **characterised in that** it comprises a control unit being apt to send and receive commands and having a touch screen being apt to display by means of icons the state of the facilities to be controlled; and several actuation modules being apt to activate and deactivate the operation of the different peripherals and being duly provided with actuation outputs; said system using the mains as a communication means.

2. An integrated system for remotely controlling a swimming pool's facilities and peripherals as per claim 1, **characterised in that** it allows to carry out a direct or a timed control; the actuation modules are provided with analog and digital inputs; the transmission being effected through the mains is a bidirectional transmission; and the control unit comprises a real time clock allowing to carry out timed cycles.

3. An integrated system for remotely controlling a swimming pool's facilities and peripherals as per claim 1, **characterised in that** the control unit is in form of an ergonomic housing being apt to be installed as a desktop unit or as a wall-mounted unit.

4. An integrated system for remotely controlling a swimming pool's facilities and peripherals as per claim 1, **characterised in that** the control unit is optionally operable as a basic on/off switch or as a cycle timer or to provide a control cycle, probe reading and facility actuation, and a set point to be maintained.
